# EUROPÄISCHE PATENTSCHRIFT

(11) **EP 1 866 122 B1**
(45) Veröffentlichungstag und Bekanntmachung des Hinweises auf die Patenterteilung: **22.12.2010**
(21) Anmeldenummer: 06725041.5
(22) Anmeldetag: 14.03.2006
(51) Int. Cl.: B23F 19/00, B23F 19/06, B23F 23/00, B23F 23/08, F16D 23/02

(54) **VORRICHTUNG UND VERFAHREN ZUM FERTIGEN VON ZAHNRÄDERN MIT HINTERLEGTEN ZAHNFLANKEN**
DEVICE AND METHOD FOR PRODUCING GEARWHEELS HAVING UNDERCUT TOOTH FLANKS
DISPOSITIF ET PROCEDE POUR PRODUIRE DES ROUES DENTEES ET DES FLANCS DE ROUE CONTRE-DEPOUILLES

(30) Priorität: 01.04.2005 DE 102005014914; 08.09.2005 DE 102005042735
(43) Veröffentlichungstag der Anmeldung: 19.12.2007
(73) Patentinhaber: Profilator GmbH & Co. KG, 42329 Wuppertal (DE)
(72) Erfinder: HEYM, Hans-Udo, 42327 Wuppertal (DE); MANKE, Dietmar, 42283 Wuppertal (DE)
(74) Vertreter: Grundmann, Dirk
(86) Internationale Anmeldenummer: PCT/EP2006/060685
(87) Internationale Veröffentlichungsnummer: WO 2006/103161

(56) Entgegenhaltungen:
- WO-A-00/05023
- DE-A1- 4 114 341
- US-A- 4 069 803

## Beschreibung

Die Erfindung betrifft ein Verfahren und eine Vorrichtung zum Fertigen von Zahnrädern mit hinterlegten Zahnflanken, wobei das Werkstück von einer Werkstückspindel drehangetrieben wird, ein ein umlaufendes Schlagmesser aufweisendes Werkzeug von einer Werkzeugspindel in einem im Wesentlichen festen Drehzahlverhältnis zur Werkstückspindel drehangetriebenen wird, und das Werkzeug relativ zum Werkstück in Richtung der Drehachse des letzteren derart vorgeschoben wird, dass das Schlagmesser bei jeder Umdrehung mit seiner Schneidkante jeweils einen Span entlang einer zu erzeugenden ersten Zahnflanke eines Zahnes abhebt, dessen zweite zu erzeugende Zahnflanke zumindest abschnittsweise spitzwinklig zu zumindest einem Abschnitt der ersten Zahnflanke verläuft.

Aus der DE 4114 341 C2 ist eine Werkzeugmaschine bekannt, mit welcher das gattungsgemäße Verfahren zur Erzeugung von Schrägverzahnungen angewendet wird. Der schräge Verlauf der Verzahnung wird durch eine Phasenverschiebung im Synchronlauf von Werkstück und Werkzeug erzeugt. Das Schlagmesser, welches von der Werkzeugspindel angetrieben wird, erzeugt mit zwei Schneidkanten jeweils beide Zahnflanken gleichzeitig. Die Werkstückspindel wird vorgeschoben.

In der WO 00/05023 wird ein Verfahren und eine Vorrichtung beschrieben, mit der die zur Hinterlegung passenden Rasttaschen in ein anderes Zahnrad gefertigt werden können. In diese Rasttaschen können die bearbeiteten Zahnflanken eingreifen.

Die mit dem zuvor beschriebenen Verfahren gefertigten Zahnräder werden insbesondere als Synchronräder in Schaltgetrieben eingesetzt.

Der Erfindung liegt die Aufgabe zugrunde, das zuvor beschriebene Verfahren und die Vorrichtung in Bezug auf die Wirtschaftlichkeit hin zu verbessern. Der Erfindung liegt ferner die Aufgabe zugrunde, ein stabileres Synchronrad anzugeben.

Gelöst wird die Aufgabe durch ein Verfahren nach Anspruch 1 und eine Vorrichtung nach Anspruch 9.

Der Anspruch 1 sieht vor, dass die zweite Zahnflanke jedes Zahnes unabhängig von der ersten Zahnflanke gefertigt wird, wobei beim Fertigen der beiden Zahnflanken die Phasenlage der Drehbewegung der Werkzeugspindel zur Drehbewegung der Werkstückspindel im Zuge des Vorschubes variiert wird.

Bevorzugt wird bei solch einem Verfahren in einem folgenden Verfahrensschritt oder zeitgleich mit der Erzeugung der ersten Zahnflanke die zweite Zahnflanke eines anderen Zahnes mit einem zweiten, ein zweites umlaufendes Schlagmesser aufweisenden Werkzeug gefertigt. Das Werkzeug wird von einer zweiten Werkzeugspindel in einem im Wesentlichen demselben festen Drehzahlverhältnis zur Werkzeugspindel drehangetrieben. Ebenfalls wird das zweite Werkzeug relativ zum Werkstück in Richtung der Drehachse des letzteren derart vorgeschoben, dass das zweite Schlagmesser bei jeder Umdrehung mit seiner Schneidkante jeweils einen Span entlang der zweiten Zahnflanke des anderen Zahnes abhebt. Die Phasenverschiebung der Drehbewegung der beiden Werkzeugspindeln gegenüber der Drehbewegung der Werkstückspindel wird im Zuge des Vorschubes gegenläufig variiert. Die beiden Schlagmesser greifen im Wesentlichen in diametraler Gegenüberlage am Werkstück an. Die Drehachsen der beiden Werkzeug spindeln stehen jeweils windschief zur Drehachse der Werkstückspindel. Die beiden Werkzeugspindeln liegen in einer gemeinsamen Ebene, und die Drehachse der Werkstückspindel verläuft in der Symmetrieebene. Beide parallel oder V-förmig zueinander angeordneten Werkzeugspindeln werden gegenläufig drehangetrieben. Zum Zwecke des Vorschubes wird ausschließlich die Werkstückspindel entlang ihrer Achse verlagert.

Der Anspruch 9 sieht vor, dass ein zweites, ein umlaufendes Schlagmesser aufweisendes von einer zweiten Werkzeugspindel drehangetriebenes Werkzeug vor, welches im Wesentlichen in demselben festen Drehzahlverhältnis zur Werkstückspindel drehantreibbar ist, wobei die zweite Werkzeugspindel derart windschief zur Werkstückspindel verläuft, dass mit der Schneidkante des zweiten Schlagmessers jeweils nur ein Span entlang der zu erzeugenden zweiten Zahnflanke eines anderen Zahnes abgehoben wird.

Bevorzugt wird so eine Vorrichtung derart ausgestaltet, dass die beiden Werkzeugspindeln in einer gemeinsamen Ebene angeordnet sind. Ebenfalls sind die beiden Werkzeugspindeln in Bezug auf einen durch die Werkstückachse verlaufende Ebene klappsymmetrisch angeordnet. Die beiden Werkzeugspindeln sind in ihrer gemeinsamen Ebene parallel oder V-förmig zueinander angeordnet. Diese sind in Gegenrichtung drehantreibbar.

Das mit dem erfindungsgemäßen Verfahren oder mit dem erfindungsgemäßen Vorrichtung herzustellende Werkstück ist ein Zahnrad, dessen Zahnflanken Hinterlegungen ausbilden. Die beiden voneinander weg weisenden Zahnflanken jedes Zahnes verlaufen spitzwinklig aufeinander zu, so dass der Zahn einen im Wesentlichen trapezförmigen Querschnitt aufweist. Derartige Zahnräder werden in Schaltgetrieben verwendet. Die Zähne des mit dem erfindungsgemäßen Verfahren hergestellten Zahnrades greifen in eine Gegenverzahnung eines anderen Zahnrades ein, wie es beispielsweise in der WO 00/05023 beschrieben wird. Das dort beschriebene Zahnrad besitzt Rasttaschen, deren Taschenwände schräg zur Erstreckung des Zahnes verlaufen. In diese Rasttaschen legen sich die Zähne des mit dem erfindungsgemäßen Verfahren gefertigten Zahnrades ein. Zufolge der Schrägflankenanlage ergibt sich eine rastende Anlage der beiden miteinander zusammen wirkenden Zahnflanken. Eines der beiden Zahnräder ist in Achsrichtung verschiebbar. Die Schrägflankenanlage wirkt selbst positionierend.

Die Erfindung wird nachfolgend anhand eines Ausführungsbeispieles näher erläutert werden. Es zeigen:
- Fig. 1: eine perspektivische Ansicht eines erfindungsgemäß hergestellten Zahnrades,
- Fig. 2: eine Ausschnittsvergrößerung eines Zahnes gemäß II aus Fig.1,
- Fig. 3: eine Ansicht auf das Zahnrad mit den beiden Werkzeugspindeln im Eingriff,
- Fig. 4: einen Schnitt gemäß der Linie IV/IV aus Fig. 3, jedoch mit gedrehter Werkzeugspindel in Blickrichtung auf das Schlagmesser,
- Fig. 5: einen Schnitt gemäß der Linie V/V, jedoch mit gedrehter Werkzeug- spindel in Blickrichtung auf das Schlagmesser,
- Fig. 6: einen Schnitt gemäß der Linie VI/ VI aus Fig. 3,
- Fig. 7: eine Ausschnittsvergrößerung gemäß VII aus Fig. 4,

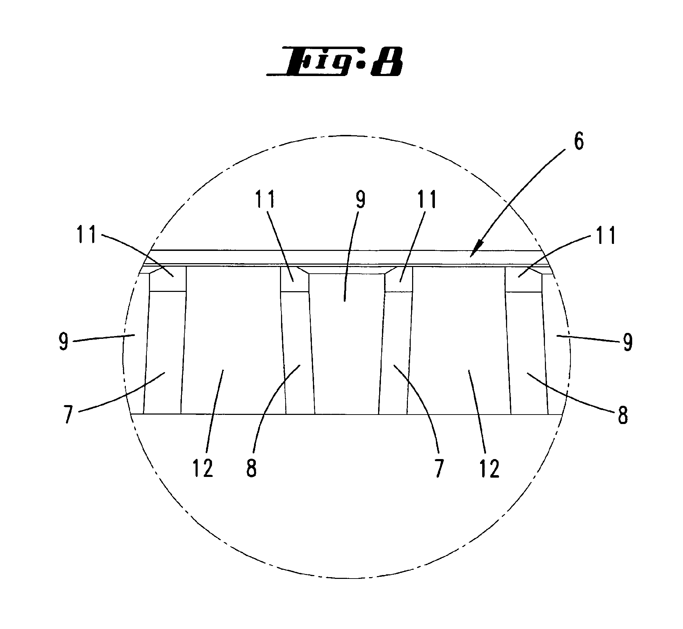

- Fig. 8: eine Ansicht des Zahnrades gemäß der Blickrichtung VIII aus Fig. 3 im vergrößerten Maßstab,
- Fig. 9: einen Schnitt gemäß der Linie IX/IX aus Fig. 3,
- Fig. 10: eine Ansicht gemäß der Blickrichtung X aus Fig. 9,
- Fig. 11: einen Schnitt gemäß der Linie XI/XI aus Fig. 3 und
- Fig. 12: eine Ansicht gemäß der Blickrichtung XII aus Fig.11

Die Darstellungen in den Zeichnungen beschränken sich auf die wesentlichen Elemente der erfindungsgemäßen Werkzeugmaschine. Diese Vorrichtung, die mit der Bezugsziffer 1 bezeichnet ist, besitzt eine Werkstückspindel, die der Übersicht halber nicht dargestellt ist, deren Werkstückspindelachse aber mit der Bezugsziffer 2 angedeutet ist. Die Vorrichtung 1 besitzt ferner zwei parallel zueinander angeordnete Werkzeugspindeln 3, 3'. Diese könne auch V-förmig zueinander stehen.

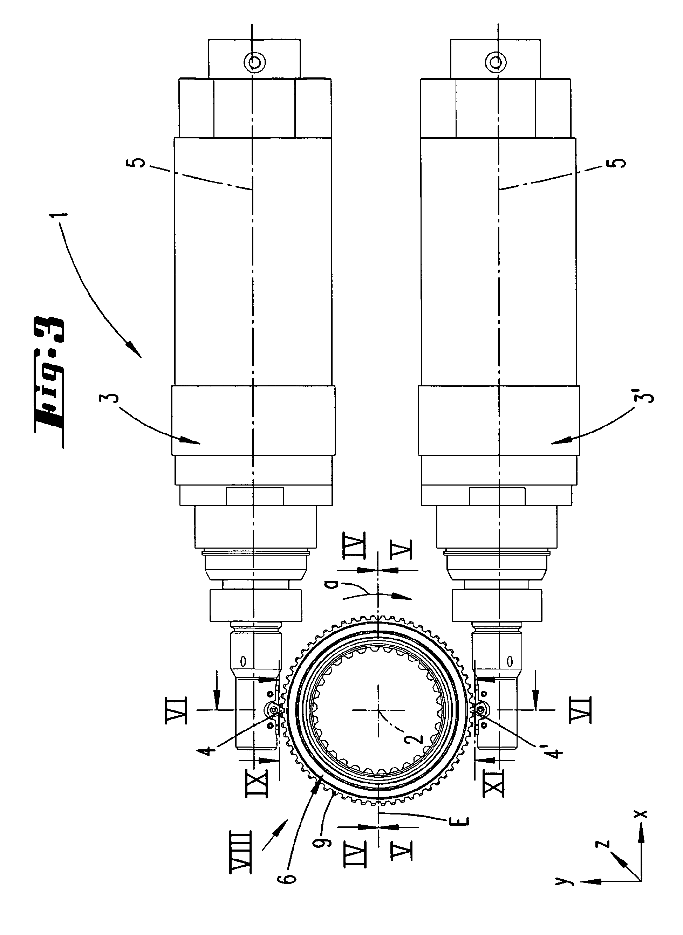

Die Fig. 3 zeigt die beiden parallel zueinander angeordneten Werkzeugspindeln 3, 3'. Jede der beiden Werkzeugspindel 3, 3' trägt einen Messerkopf. Diese sind in der Fig. 3 links dargestellt. Jeder Messerkopf trägt ein Schlagmesser 4, 4', welches in einer Umlaufebene um die Drehachse 5 der Werkzeugspindel 3, 3' rotiert.

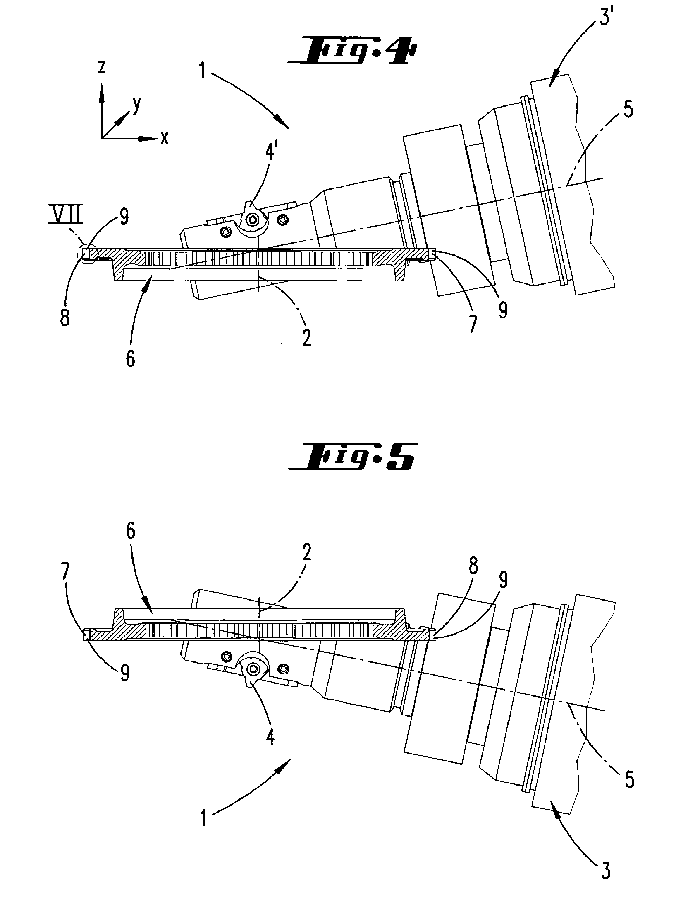

Die räumliche Zuordnung von Werkstückspindelachse 2 und Werkzeugspindelachsen 5 geht aus den Fig. 3 bis 5 hervor. Die Werkzeugspindelachse 2 verläuft in der z-Richtung des in den Zeichnungen dargestellten Koordinatensystems, so dass das Werkstück 6, also das zu verzahnende Zahnrad in der x-y-Ebene liegt.

Die beiden Werkzeugspindelachsen 5 verlaufen parallel zueinander in der x-y - Achse.

Die Werkzeugspindelachsen 5 sind zur x-Achse geneigt. Sie stehen in einem spitzen Winkel zu der x-Achse.

Mit der Bezugsziffer E ist eine Symmetrieebene angedeutet, die senkrecht zur z-Richtung, also in der x-y-Ebene verläuft. Im Ausführungsbeispiel sind die Werkzeugspindeln 3, 3' so angeordnet, dass sie klappsymmetrisch zu dieser Ebene E liegen.

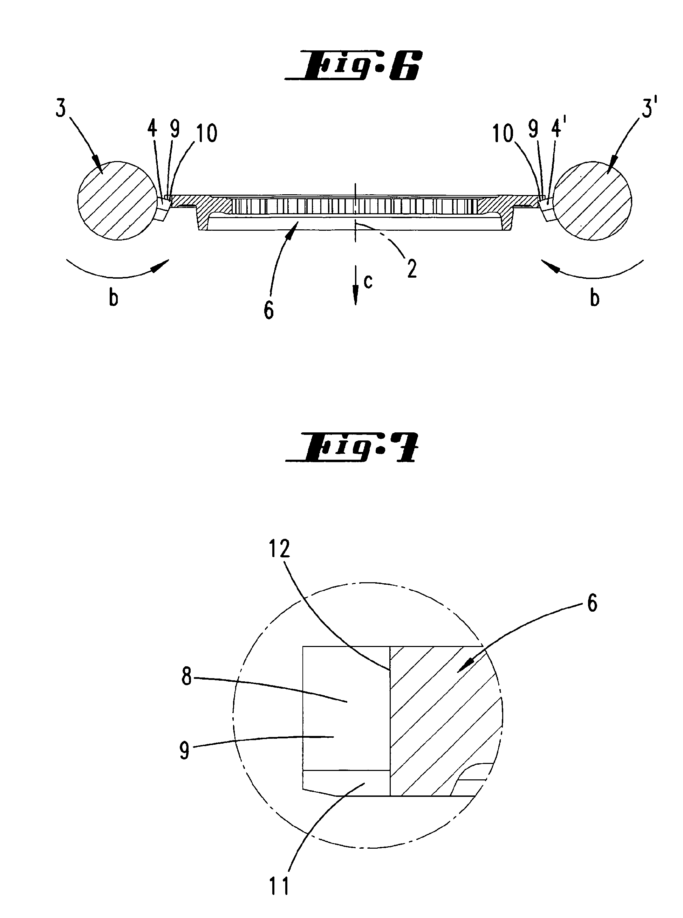

Beide Werkzeugspindelachsen 5 sind um denselben Winkel gegenüber der x-Achse geneigt, so dass die beiden Werkzeugspindelachsen 5 in einer gemeinsamen Ebene liegen, in welcher auch die y-Achse liegt. Die nicht dargestellte Werkstückspindel treibt das Zahnrad 6 in Pfeilrichtung a, an. Die Drehrichtung der einzelnen Werkzeugspindeln 3, 3' wird mit den Pfeilen b in Fig. 6 veranschaulicht. Die Drehrichtungen der beiden Werkzeugspindeln 3, 3' sind gegen läufig. Beide Werkzeugspindeln 3, 3' drehen sich derartig, dass die von ihnen drehangetriebenen Schlagmesser 4, 4' entgegen der Richtung des Vorschubes c schneidend in das Werkstück 6 eingreifen. D. h., die Schnittrichtung der Schlagmesser 4, 4' verläuft gegensinnig zum Vorschub c. Die beiden Werkzeugspindeln 3, 3' laufen im Wesentlichen in demselben festen Drehzahlverhältnis zur Werkstückspindel. Das Drehzahlverhältnis ist so gewählt, dass sich das Werkstück 6 nach einer vollständigen Umdrehung einer der beiden Werkzeugspindeln 3, 3' um zumindest einen Zahn weitergedreht hat.

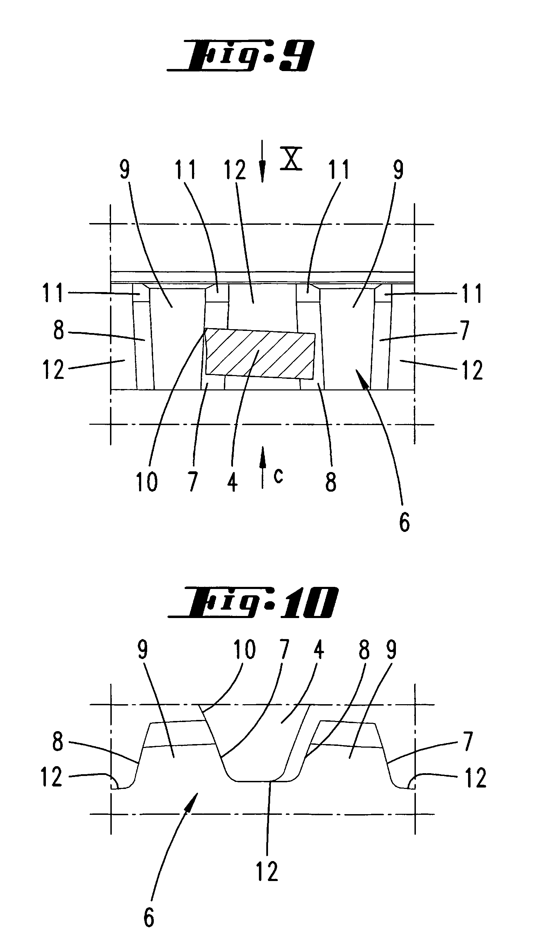

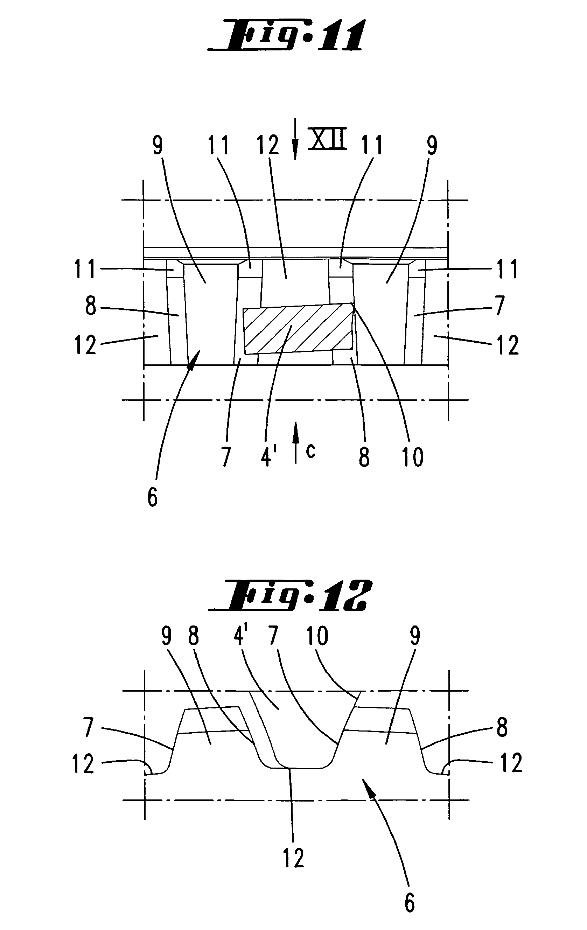

Wie anhand der Fig. 9 bis 12 zu sehen ist, wird durch die beiden Schlagmesser 4, 4' jeweils zeitgleich eine erste Zahnflanke 7 und eine zweite Zahnflanke 8 jeweils eines i.W. diametral gegenüberliegenden Zahnes 9 mit einer Schneidkante 10 eines Schlagmessers 4, 4' bearbeitet.

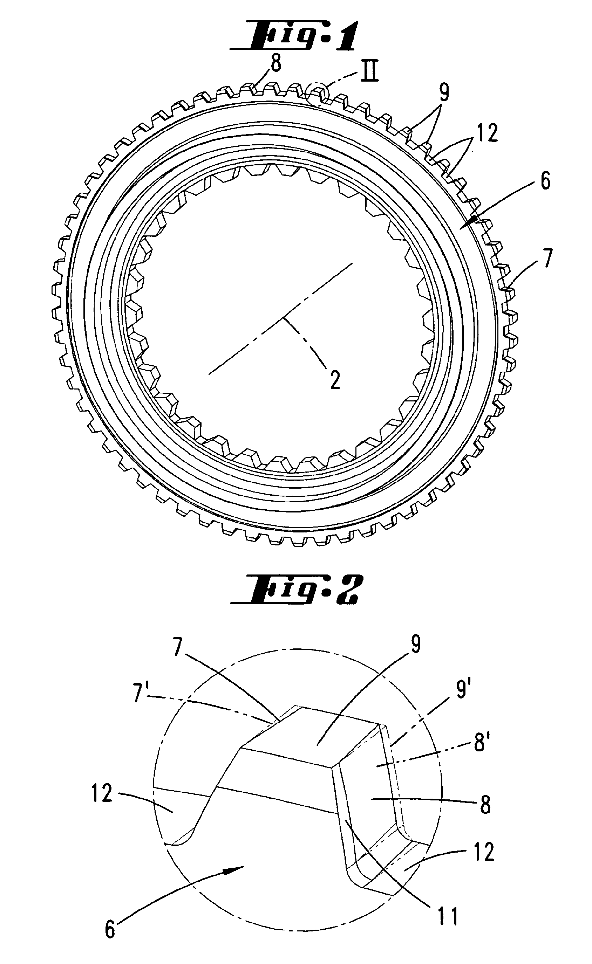

Die Fig. 1 zeigt das fertig bearbeitete Zahnrad und die Fig. 2 vergrößert einen mit dem erfindungsgemäßen Verfahren gefertigten Zahn 9. Zur Verdeutlichung sind mit Strich-zwei punktierten Linien die Flanken 7', 8' eines Zahnes angedeutet, die parallel zueinander verlaufen. Mit dem erfindungsgemäßen Verfahren werden solche Zahnflanken 7, 8 erzeugt, die spitzwinklig zueinander verlaufen, die also geneigt zu den gedachten Parallelflanken 7', 8' verlaufen. Die zur Breitseite des Werkstückes verlaufenden Randkanten der schräg verlaufenden Zahnflanken 7, 8 entsprechen den gedachten Kanten der Parallelflanken 7', 8'.

Mit dem erfindungsgemäßen Verfahren können die Zähne unmittelbar aus einem Vollmaterial herausgearbeitet werden. Es ist aber auch möglich, einen bereits vorverzahnten Rohling, dessen Zahnflanken parallel verlaufen, nach zu bearbeiten. Dieser vorverzahnte Rohling besitzt dann Zähne 9, dessen Zahnflanken auf den mit 7' bzw. 8' bezeichneten Flächen verlaufen. Der Zahngrund 12, der sich am Fußkreis der Verzahnung befindet, verläuft ebenfalls parallel zur Werkstückspindelachse 2. Dieser wird von der Bearbeitung nicht beeinflusst.

Bei diesem Verfahren ist es möglich, die zweite Zahnflanke 8 eines Zahnes 9 unabhängig von der ersten Zahnflanke 7 zu fertigen. Beim Fertigen der beiden Zahnflanken 7,8 wird die Phasenlage der Drehbewegung der Werkzeugspindel 3 zur Drehbewegung der Werkstückspindel einhergehend mit dem Vorschub c variiert. Um die schräg verlaufenden Flanken 7, 8 zu erzeugen, steigt der Phasenwinkel der beiden Drehbewegungen mit dem Vorschub an. Bevorzugt handelt es sich hier um eine lineare Beziehung zwischen Vorschub c und Phasenwinkel. Da sich die beiden Werkzeugspindeln 3,3' gegenläufig drehen, und spitzwinklig aufeinander zu laufende Zahnflanken 7, 8 gefertigt werden sollen, liegen die Phasenwinkel auch entgegen gerichtet zueinander. Ihr Betrag ändert sich aber in gleicher Weise mit dem Vorschub c.

Im Ausführungsbeispiel werden die erste Zahnflanke 7 und die zweite Zahnflanke 8 gleichzeitig gefertigt, wobei jede Zahnflanke 7, 8 mit einem ihr zugeordneten Schlagmesser 4, 4' gefertigt wird. Dabei schneidet nur eine Schneidkante des jeweiligen Schlagmessers 4, 4' eine der beiden Zahnflanken 7, 8. Die jeweils andere Zahnflanke wird dann vom jeweils anderen Schlagmesser 4, 4' gefertigt. Die Bearbeitung der Zahnflanken 7, 8 erfolgt aber nur insofern gleichzeitig, als sie jeweils an einem anderen Zahn gefertigt wird. Beide Schlagmesser 4, 4' müssen nicht gleichzeitig in spanabhebendem Eingriff stehen.

In einer nicht dargestellten Variante der Erfindung können die Zahnflanken 7, 8 auch in aufeinander folgenden Bearbeitungsschritten gefertigt werden. Hier ist nur eine Werkzeugspindel 3 erforderlich. In einem ersten Verfahrensschritt werden die Zahnflanken 7 mit dem aus der DE 4114 341 C2 bekannten Verfahren gefertigt. In einem darauf folgenden Verfahrensschritt werden ebenfalls nach dieser Methode die zweiten Zahnflanken 8 gefertigt, wobei die Phasenlage aber gegensinnig variiert wird, so dass in die andere Richtung verlaufende Schrägflanken gefertigt werden.

Im Ausführungsbeispiel bearbeiten die beiden Schlagmesser 4, 4' das Zahnrad 6 annähernd zeitgleich, da die Schlagmesser 4, 4' im Wesentlichen in diametraler Gegenüberlage am Zahnrad 6 angreifen. Dazu stehen die Werkzeugspindelachsen 5 der beiden Werkzeugspindeln 3, 3' jeweils windschief zur Werkstückspindelachse 2. Die Drehrichtungen a, b der beiden Werkzeugspindel 3, 3' sind so gewählt, dass die Schnittrichtung der Schlagmesser 4, 4' der Vorschubrichtung c entgegen gerichtet ist. Beim Ausführungsbeispiel wird das Werkstück, d.h. die Werkstückspindel gegenüber dem Maschinenbett verlagert. Die Werkzeugspindeln 3, 3' verbleiben fest gegenüber dem Maschinenbett. Es ist aber auch möglich, die Werkstückspindel gegenüber dem Maschinenbett festzuhalten und die beiden Werkzeugspindeln 3, 3' zum Zwecke des Vorschubes c zu verlagern. Dieser Vorschub c verläuft in Erstreckungsrichtung der Werkstückspindelachse 2. Dies ist ebenfalls in Fig. 6 gut zu sehen.

Bei einem vorbekannten Verfahren zum Herstellen hinterlegter Zahnflanken hatte die Bearbeitung des Zahnrades auch eine Auswirkung auf den Zahngrund. Der Zahngrund 12 verlief dort nicht parallel zur Zahnradachse, sondern annähernd konisch zu dieser. Durch den Konusverlauf des Zahngrundes verjüngt sich die Materialstärke des Zahnes in Umfangrichtung. Dadurch wird dieser geschwächt und kann leichter ausbrechen. Mit dem erfindungsgemäßen Verfahren ist dieser Nachteil behoben. Der Zahngrund 12 verläuft jetzt auf einer Zylinderebene zur Werkstückachse. Mit dem erfindungsgemäßen Verfahren hat sich nicht nur die Wirtschaftlichkeit erhöht. Beide Zahnflanken 7, 8 können ohne Umspannen des Werkstückes gefertigt werden. Das gefertigte Zahnrad besitzt auch eine höhere Stabilität.

Das mit dem zuvor beschriebenen Verfahren gefertigte Zahnrad, bei dem es sich bevorzugt um ein Synchronrad eines Schaltgetriebe handelt, besitzt Zähne (9), deren voneinander weg weisenden Zahnflanken (7, 8) spitzwinklig zueinander verlaufen, so dass der Querschnitt eines Zahnes aus kopfseitiger Betrachtung eine Trapezform besitzt. Der sich zwischen beiden Zähnen erstreckende Zahngrund verläuft aber nicht wie bei den bekannten Synchronringen konisch, d.h. geneigt zur Drehachse sondern parallel zur Drehachse des Zahnrades, so dass die Stabilität des Synchronringes in erheblichem Maße vergrößert ist.

## Patentansprüche

1. Verfahren zum Fertigen von Zahnrädern (6) mit hinterlegten Zahnflanken (7, 8), wobei das Werkstück von einer Werkstückspindel drehangetrieben wird, ein ein umlaufendes Schlagmesser (4) aufweisendes Werkzeug von einer Werkzeugspindel (3) in einem im Wesentlichen festen Drehzahlverhältnis zur Werkstückspindel drehangetrieben wird, und das Werkzeug relativ zum Werkstück in Richtung der Drehachse (2) des letzteren derart vorgeschoben wird, dass das Schlagmesser (4) bei jeder Umdrehung mit seiner Schneidkante (10) jeweils einen Span entlang einer zu erzeugenden ersten Zahnflanke (7) eines Zahnes (9) abhebt, dessen zweite zu erzeugende Zahnflanke (8) zumindest abschnittsweise spitzwinklig zu zumindest einem Abschnitt der ersten Zahnflanke (7) verläuft, **dadurch gekennzeichnet, dass** die zweite Zahnflanke (8) jedes Zahnes (9) unabhängig von der ersten Zahnflanke (7) gefertigt wird, wobei beim Fertigen der beiden Zahnflanken (7, 8) die Phasenlage der Drehbewegung der Werkzeugspindel (3) zur Drehbewegung der Werkstückspindel im Zuge des Vorschubes (c) variiert wird.

2. Verfahren nach Anspruch 1, **dadurch gekennzeichnet, dass** in einem folgenden Verfahrensschritt oder zeitgleich mit der Erzeugung der ersten Zahnflanke (7) die zweite Zahnflanke (8) eines anderen Zahnes (9) mit einem zweiten, ein zweites umlaufendes Schlagmesser (4') aufweisenden Werkzeuges gefertigt wird, das von einer zweiten Werkzeugspindel (3) in einem im Wesentlichen demselben festen Drehzahlverhältnis zur Werkstückspindel drehangetrieben wird und das zweite Werkzeug relativ zum Werkstück in Richtung der Drehachse (2) des letzteren derart vorgeschoben wird, dass das zweite Schlagmesser (4') bei jeder Umdrehung mit seiner Schneidkante (10) jeweils einen Span entlang der zweiten Zahnflanke (8) des anderen Zahnes abhebt.

3. Verfahren nach einem der vorhergehenden Ansprüche, **dadurch gekennzeichnet, dass** die Phasenverschiebungen der Drehbewegungen der beiden Werkzeugspindeln (3, 3') gegenüber der Drehbewegung der Werkstückspindel im Zuge des Vorschubes (c) gegenläufig variiert werden.

4. Verfahren nach einem der vorhergehenden Ansprüche, **dadurch gekennzeichnet, dass** die beiden Schlagmesser (4, 4') im Wesentlichen in diametraler Gegenüberlage am Werkstück angreifen.

5. Verfahren nach einem der vorhergehenden Ansprüche, **dadurch gekennzeichnet, dass** die Drehachsen (5) der beiden Werkzeugspindeln (3, 3') jeweils windschief zur Drehachse (2) der Werkstückspindel stehen.

6. Verfahren nach einem der vorhergehenden Ansprüche, **dadurch gekennzeichnet, dass** die beiden Werkzeugspindeln (3, 3') in einer gemeinsamen Ebene liegen und die Drehachse (2) der Werkstückspindel in der Symmetrieebene verläuft.

7. Verfahren nach einem der vorhergehenden Ansprüche, **dadurch gekennzeichnet, dass** die beiden parallel oder V-förmig zueinander angeordneten Werkzeugspindeln (3, 3') gegenläufig drehangetrieben werden.

8. Verfahren nach einem der vorhergehenden Ansprüche, dass zum Zwecke des Vorschubes (c) ausschließlich die Werkstückspindel entlang ihrer Achse (2) verlagert wird.

9. Vorrichtung (1) zum Fertigen von Zahnrädern (6) mit hinterlegten Zahnflanken (7, 8) mit einer drehantreibbaren Werkstückspindel und einer im Wesentlichen in einem festen Drehzahlverhältnis zur Werkstückspindel drehantreibbaren, ein umlaufendes Schlagmesser (4) tragenden Werkzeugspindel (7), wobei die Werkstückspindel in ihrer Achsrichtung (2) zwecks Erzielung eines Vorschubes (c) verlagerbar ist und die Werkstückspindelachse (2) derart windschief zur Werkzeugspindelachse (5) verläuft, dass das Schlagmesser (4) bei jeder Umdrehung mit seiner Schneidkante (10) jeweils einen Span entlang einer ersten zu erzeugenden Zahnflanke (7) eines Zahnes (9) abhebt, dessen zweite Zahnflanke (8) zumindest abschnittsweise spitzwinklig zu zumindest einem Abschnitt der ersten Zahnflanke (7) verläuft, **gekennzeichnet durch** ein zweites, ein umlaufendes Schlagmesser (4') aufweisendes von einer zweiten Werkzeugspindel (3') drehangetriebenes Werkzeug, welches im Wesentlichen in demselben festen Drehzahlverhältnis zur Werkstückspindel drehantreibbar ist, wobei die zweite Werkzeugspindel derart windschief zur Werkstückspindel verläuft, dass mit der Schneidkante (10) des zweiten Schlagmessers (4') jeweils nur ein Span entlang der zu erzeugenden zweiten Zahnflanke (8) eines anderen Zahnes (9) abgehoben wird.

10. Vorrichtung nach Anspruch 9 , **dadurch gekennzeichnet, dass** die beiden Werkzeugspindeln (3, 3') in einer gemeinsamen Ebene angeordnet sind.

11. Vorrichtung nach einem der Ansprüche 9 und 10, **dadurch gekennzeichnet, dass** die beiden Werkzeugspindeln (3, 3') in Bezug auf eine durch die Werkstückspindelachse (2) verlaufende Ebene (E) klappsymmetrisch angeordnet sind.

12. Vorrichtung nach einem der vorhergehenden Ansprüche, dass die beiden Werkzeugspindeln (3, 3') in ihrer gemeinsamen Ebene parallel oder V-förmig zueinander angeordnet sind.

13. Vorrichtung nach einem der vorhergehenden Ansprüche, **dadurch gekennzeichnet, dass** die beiden Werkzugspindeln (3, 3') in Gegenrichtung drehantreibbar sind.

## Claims

1. Method for producing gearwheels (6) having undercut tooth flanks (7, 8), the workpiece being rotatably driven by a workpiece spindle, a tool comprising a rotating fly cutter (4) being rotatably driven by a tool spindle (3) in a substantially fixed rotational speed ratio relative to the workpiece spindle, and the tool being advanced relative to the workpiece in the direction of the rotational axis (2) thereof in such a way that, with each rotation, the cutting edge (10) of the fly cutter (4) removes one chip in each case along a first tooth flank (7) to be produced of a tooth (9), of which the second tooth flank (8) to be produced extends at an acute angle to at least one portion of the first tooth flank (7), at least in portions, **characterised in that** the second tooth flank (8) of each tooth (9) is produced independently of the first tooth flank (7), the phase position of the rotational movement of the tool spindle (3) being varied during production of the two tooth flanks (7, 8) for the rotational movement of the workpiece spindle in the course of the feed movement (c).

2. Method according to claim 1, **characterised in that**, in a following method step or simultaneously with the production of the first tooth flank (7), the second tooth flank (8) of another tooth (9) is produced using a second tool which comprises a second rotating fly cutter (4') and is rotatably driven in a substantially identical fixed rotational speed ratio relative to the workpiece spindle and the second tool is advanced relative to the workpiece in the direction of the rotational axis (2) thereof in such a way that, with each rotation, the cutting edge (10) of the second fly cutter (4') removes one chip in each case along the second tooth flank (8) of the other tooth.

3. Method according to any one of the preceding claims, **characterised in that**, in the course of the feed movement (c), the phase displacements of the rotational movements of the two tool spindles (3, 3') are varied in opposite directions relative to the rotational movement of the workpiece spindle.

4. Method according to any one of the preceding claims, **characterised in that** the two fly cutters (4, 4') act on the workpiece in a substantially diametrically opposed manner.

5. Method according to any one of the preceding claims, **characterised in that** the rotational axes (5) of the two tool spindles (3, 3') are each skewed relative to the rotational axis (2) of the workpiece spindle.

6. Method according to any one of the preceding claims, **characterised in that** the two tool spindles (3, 3') are located in a common plane and the rotational axis (2) of the workpiece spindle extends in the plane of symmetry.

7. Method according to any one of the preceding claims, **characterised in that** the two tool spindles (3, 3'), which are arranged parallel to one another or in a V-shape, are rotatably driven in opposite directions.

8. Method according to any one of the preceding claims, **characterised in that**, for the purpose of the feed movement (c), only the tool spindle is displaced along its axis (2).

9. Device (1) for producing gearwheels (6) having undercut tooth flanks (7, 8) having a rotatably driveable workpiece spindle and a tool spindle (7) which bears a rotating fly cutter (4) and can be rotatably driven in a substantially fixed rotational speed ratio relative to the workpiece spindle, the workpiece spindle being displaceable in the axial direction (2) thereof in order to achieve a feed movement (c) and the workpiece spindle axis (2) extending skewed relative to the tool spindle axis (5), in such a way that, with each rotation, the cutting edge (10) of the fly cutter (4) removes one chip in each case along a first tooth flank (7) to be produced of a tooth (9), of which the second tooth flank (8) to be produced extends at an acute angle to at least one portion of the first tooth flank (7), at least in portions, **characterised by** a second tool which comprises a rotating fly cutter (4') and is rotatably driven by a second tool spindle (3'), which substantially can be rotatably driven in an identical fixed rotational speed ratio relative to the workpiece spindle, the second tool spindle extending skewed relative to the workpiece spindle in such a way that the cutting edge (10) of the second fly cutter (4') removes only one chip in each case along the second tooth flank (8) to be produced of another tooth (9).

10. Device according to claim 9, **characterised in that** the two workpiece spindles (3, 3') are arranged in a common plane.

11. Device according to either claim 9 or claim 10, **characterised in that** the two tool spindles (3, 3') are arranged in reflectional symmetry in relation to a plane (E) extending through the workpiece spindle axis (2).

12. Device according to any one of the preceding claims, **characterised in that** the two tool spindles (3, 3') are arranged parallel to one another or in a V-shape in their common plane.

13. Device according to any one of the preceding claims, **characterised in that** the two tool spindles (3, 3') can be rotatably driven in opposite directions.

## Revendications

1. Procédé de fabrication de roues dentées (6) à flancs de dent (7, 8) contre-dépouillés, la pièce étant entraînée en rotation par une broche porte-pièce, un outil présentant un couteau à percussion (4) planétaire étant entraîné en rotation par une broche porte-outil (3) selon un rapport de vitesse de rotation essentiellement fixe par rapport à la broche porte-pièce, et l'outil étant déplacé par rapport à la pièce dans le sens de l'axe de rotation (2) de ladite pièce de sorte que le couteau à percussion (4) enlève à chaque rotation, avec son arête coupante (10) respectivement un copeau le long d'un premier flanc de dent (7) à produire d'une dent (9) dont le second flanc de dent (8) à produire s'étend au moins par section de manière tangentielle par rapport à au moins une section du premier flanc de dent (7), **caractérisé en ce que** le second flanc de dent (8) de chaque dent (9) est produit indépendamment du premier flanc de dent (7), la position de phase du mouvement rotatif de la broche porte-outil (3) étant modifiée, lors de la production des deux flancs de dent (7, 8) par rapport au mouvement rotatif de la broche porte-pièce au cours de l'avancée (c).

2. Procédé selon la revendication 1, **caractérisé en ce que** le second flanc de dent (8) d'une autre dent (9) est produit avec un second outil présentant un second couteau à percussion (4') planétaire, dans une étape de procédé suivante ou en même temps que la production du premier flanc de dent (7), ledit outil étant entraîné en rotation par une seconde broche porte-outil (3) en un rapport de vitesse de rotation fixe essentiellement identique par rapport à la broche porte-pièce et le second outil est déplacé par rapport à la pièce dans le sens de l'axe de rotation (2) de ladite pièce de sorte que le second couteau à percussion (4') enlève à chaque rotation avec son arête coupante (10) respectivement un copeau le long du second flanc de dent (8) de l'autre dent.

3. Procédé selon l'une quelconque des revendications précédentes, **caractérisé en ce que** les déplacements de phase des mouvements rotatifs des deux broches porte-outils (3, 3') sont modifiés de manière opposée par rapport au mouvement rotatif de la broche porte-pièce au cours de l'avancée (c).

4. Procédé selon l'une quelconque des revendications précédentes, **caractérisé en ce que** les deux couteaux à percussion (4, 4') aborde la pièce selon une position essentiellement diamétralement opposée.

5. Procédé selon l'une quelconque des revendications précédentes, **caractérisé en ce que** les axes de rotation (5) des deux broches porte-outils (3, 3') se trouvent respectivement à gauche de l'axe de rotation (2) de la broche porte-pièce.

6. Procédé selon l'une quelconque des revendications précédentes, **caractérisé en ce que** les deux broches porte-outils (3, 3') se trouvent dans un plan commun et l'axe de rotation (2) de la broche porte-pièce passe par le plan de symétrie.

7. Procédé selon l'une quelconque des revendications précédentes, **caractérisé en ce que** les de deux broches porte-outils (3, 3') agencées parallèlement ou en forme de V l'une par rapport à l'autre sont entraînées en rotation en sens opposé.

8. Procédé selon l'une quelconque des revendications précédentes, **caractérisé en ce que**, pour l'avancée (c), la broche porte-pièce est exclusivement déplacée le long de son axe (2).

9. Dispositif (1) pour la production de roues dentées (6) à flancs de dent (7, 8) contre-dépouillés comprenant une broche porte-pièce pouvant être entraînée en rotation et une broche porte-outil (7) portant un couteau à percussion (4) planétaire, pouvant être entraînée en rotation essentiellement selon un rapport de vitesse de rotation fixe par rapport à la broche porte-pièce, la broche porte-pièce pouvant être déplacée dans sa direction axiale (2) afin d'obtenir une avancée (c) et l'axe (2) de broche porte-pièce passant à gauche de l'axe (5) de broche porte-outil, de sorte que le couteau à percussion (4) enlève avec son arête de coupe (10), à chaque rotation, respectivement un copeau le long d'un premier flanc de dent (7) à produire d'une dent (9) dont le second flanc de dent (8) s'étend au moins par section de manière tangentielle par rapport à au moins une section du premier flanc de dent (7), **caractérisé par** un second outil entraîné en rotation par une seconde broche porte-outil (3'), présentant un couteau à percussion (4') planétaire, lequel outil peut être entraînée en rotation selon un rapport de vitesse de rotation essentiellement fixe et identique par rapport à la broche porte-pièce, la seconde broche porte-outil se trouvant à gauche par rapport à la broche porte-pièce, de sorte que respectivement seulement un copeau le long du second flanc de dent (8) à produire d'une autre dent (9) est enlevé par l'arête de coupe (10) du second couteau à percussion (4').

10. Dispositif selon la revendication 9, **caractérisé en ce que** les deux broches porte-outils (3, 3') sont agencées dans un plan commun.

11. Dispositif selon l'une quelconque des revendications 9 et 10, **caractérisé en ce que** les deux broches porte-outils (3, 3') sont agencées selon une symétrie de recouvrement par rapport à un plan (E) passant par l'axe (2) de broche porte-pièce.

12. Dispositif selon l'une quelconque des revendications précédentes, **caractérisé en ce que** les deux broches porte-outils (3, 3') sont agencées parallèlement ou en forme de V l'une par rapport à l'autre dans leur plan commun.

13. Dispositif selon l'une quelconque des revendications précédentes, **caractérisé en ce que** les deux broches porte-outils (3, 3') peuvent être entraînées en rotation en sens inverse.
